# EUROPEAN PATENT APPLICATION

(11) **EP 0 538 991 A1**
(43) Date of publication of application: **28.04.1993**
(21) Application number: 92306781.3
(22) Date of filing: 24.07.1992
(51) Int. Cl.: F16H 25/22, F16H 25/24

(54) **Ball screw system**

(30) Priority: 23.10.1991 JP 275153/91
(71) Applicant: Moriyama, Masao, Nishinomiyashi Hyogo 663 (JP)
(72) Inventor: Moriyama, Masao, Nishinomiyashi Hyogo 663 (JP)
(74) Representative: Valentine, Francis Anthony Brinsley

(57) **Abstract**

A ball screw system comprises an inner screw member (2), an outer screw member (3) and a plurality of balls (1). Each ball is held between a flank of the thread (4) of the inner screw member and a flank of the thread (5) of the outer screw member. The thread of each screw member extends into the spaces between the thread of the other screw member.

## Description

The present invention relates to a ball screw system, comprising an inner screw member and an outer screw member and a plurality of balls between their threads.

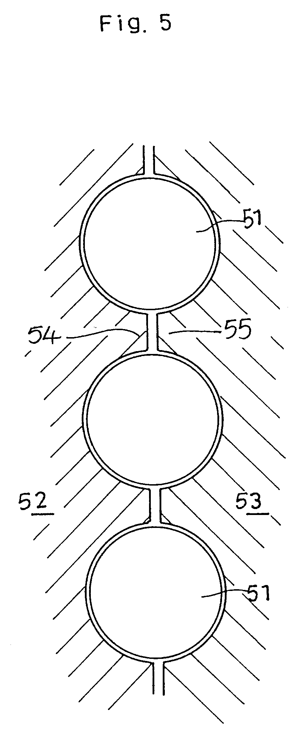

Japanese Utility Model Applications nos. 3-33254 and 3-59547 disclose conventional ball screw systems, such as is shown in Fig. 5 of the accompanying drawings. This comprises an inner screw member 52, an outer screw member 53 and a plurality of balls 51. The threads 54, 55 of the screw members are formed by a helical groove of semi-circular cross-section. Each ball is positioned between a flank of the thread of the inner screw member and a flank of the thread of the outer screw member.

The present invention provides such a ball screw system characterised in that the thread of each screw member extend into the spaces between the thread of the other screw member.

When a load is applied to one of the screw members of the ball screw system of the present invention, each ball is subjected to forces which act through the centre of the ball and there are no shearing stresses on the balls. Such stresses damage the conventionally used ceramic forces and limit the load that may be transferred through the balls.

Preferably each ball is positioned between a ball track on opposed flanks of the thread of each member, with the point of contact of the ball with each ball track being equi-distant from the axis of the screw members.

Preferably each ball is positioned between a concave ball track on the thread root surface of each screw member, with the point of contact of the ball with each ball track being equi-distant from the axis of the screw members.

The present invention finds particular application in the design of an inexpensive, yet reliable, screw-driven elevator for a building having a relatively low number of stories.

The present invention further provides a worm gear system comprising a ball screw system according to the present invention.

The present invention will now be described with reference to the accompanying drawings, in which:
Fig. 1 is a partial longitudinal-sectional view of a ball screw system according to a first embodiment of the present invention;
Fig. 2 is a partial longitudinal-sectional view of a ball screw system according to a second embodiment of the present invention;
Fig.3 is a longitudinal-sectional view of a ball screw system according to the present invention;
Fig 4. is a longitudinal-sectional view of a worm gear mechanism according to the present invention comprising a ball screw system according to the present invention; and
Fig. 5 is a partial cross-sectional view of a conventional ball screw system,

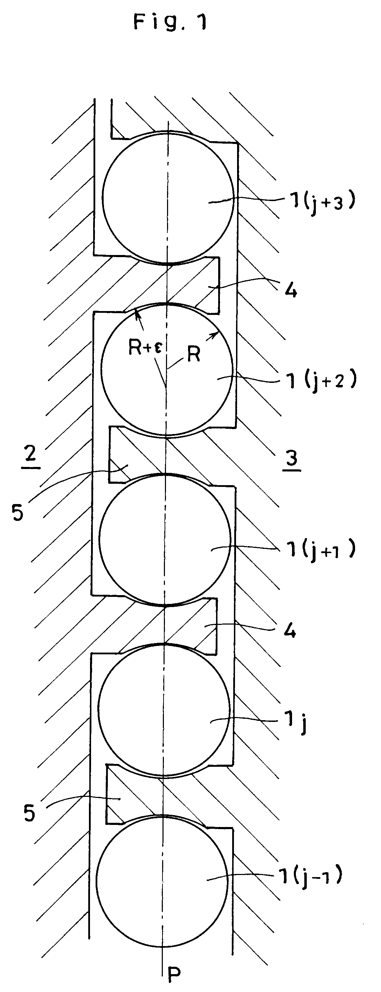

Referring to Fig. 1, the thread 4 of an inner screw member 2 extends into the spaces between the thread 5 of an outer screw member 3. The thread 5 of the outer screw member 3 extends into the spaces between the thread 4 of the inner screw member 2. A ball 1 of radius R is held between a flank of the thread of the inner screw member and a flank of the thread of the outer screw member. The flanks of the thread of each screw member have a concave ball track, which has a radius of curvature of R+ε. If R is 5.00 mm, ε is 0.03 mm.

The elasticity of the threads of the screw members is greater than that of the balls. The screw members are preferably made of a hard and elastic material such as steel. The balls are preferably ceramic. Preferred ceramics are alumina and zirconia because of their high compressive strength, hardness and anti-abrasiveness.

If the load acting on the outer screw member is small there is only a point contact between each ball and ball track. If the load acting on the outer screw member is large, ε approaches 0, giving an increased surface contact between the ball and ball track.

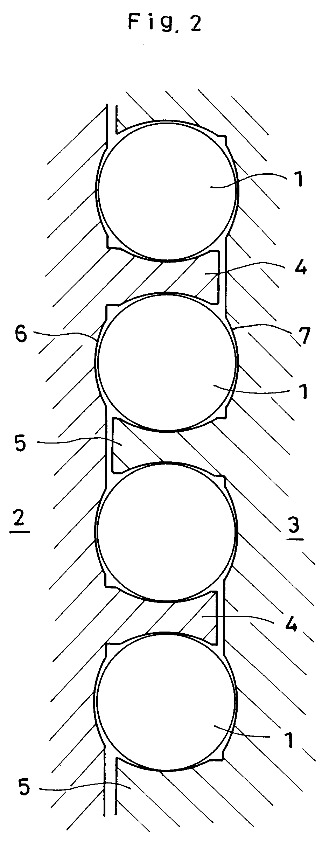

Referring to Fig. 2, in a second embodiment of the present invention, each ball is held between a concave ball track on the thread root surface of each screw member, with the point of contact of the ball with each ball track being equi-distant from the axis of the screw members. This reduces the distance between the centre of each ball and the point where the base of each thread meets the body of each screw member compared with the first embodiment of the invention. The threads of the second embodiment are thus stiffer than those of the first embodiment.

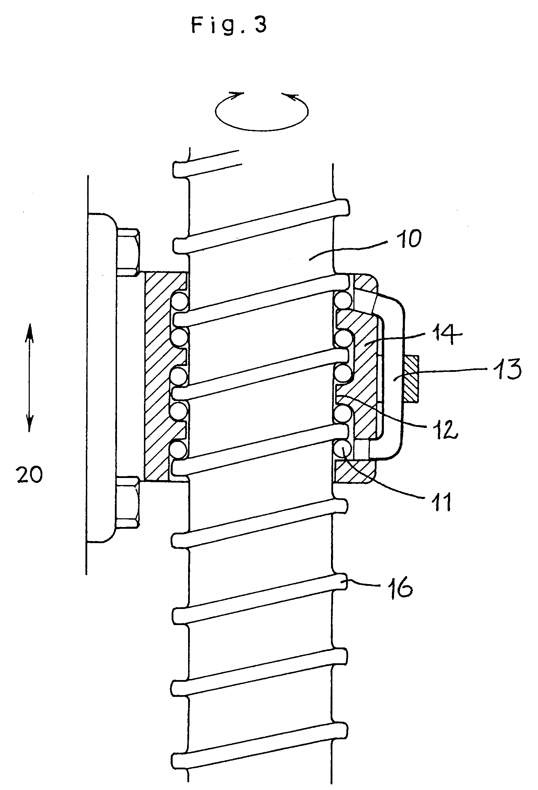

In the case of the ball screw system shown in Fig. 3, rotation of the inner screw member, a lead screw 10, causes vertical movement of the outer screw member, a nut 14, and of a body 20, fixed to the nut. The thread 12 of the nut 14 extends into the spaces between the thread 16 of the lead screw 10. The thread 16 of the lead screw 10 extends into the spaces between the thread 12 of the nut 14. Balls 11 are positioned between the flanks of the so-engaged threads. A return passage 13 extends between the ends of the nut 14.

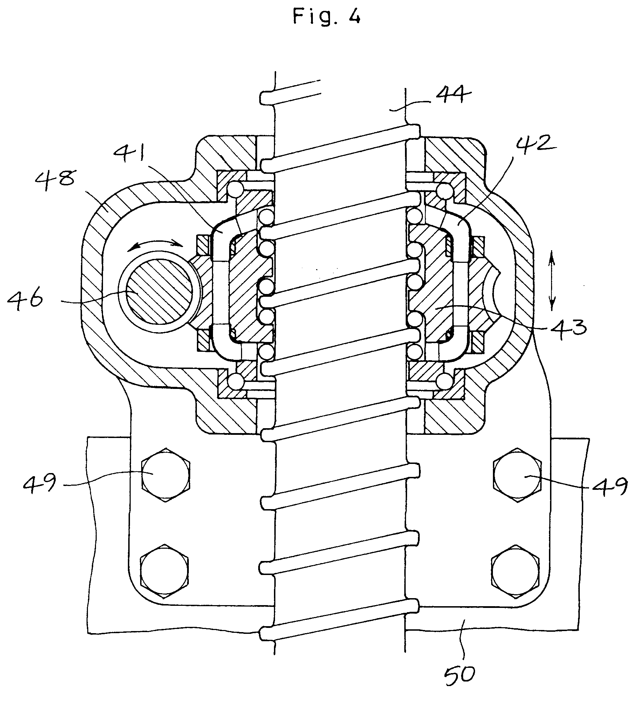

Fig. 4 shows a worm gear system having a ball screw system according to the present invention. Rotation of a worm 46 causes a worm wheel 43 to rotate about an axis perpendicular to the axis of rotation of the worm 46. The worm wheel forms the nut of a ball screw system, having an inner screw thread, which extends into the spaces between the thread of a lead screw 44. The thread of the lead screw extends into the spaces between the inner thread of the worm wheel. The worm gear system, encased in a gear case 48, is fixed by bolts 49 to a base 50. As the worm wheel rotates the lead screw 44 moves vertically. Return passages 41 and 42 extend between the ends of the nut.

The present invention is not limited to ball screw systems having screw members with only a one-start thread; it may be applied to systems in which the screw members are multi-start threaded.

## Claims

1. A ball screw system comprising an inner screw member (2), an outer screw member (3) and a plurality of balls (1), each ball (1) being positioned between a flank of the thread (4) of the inner screw member and a flank of the thread (5) of the outer screw member, characterised in that the thread of each screw member extends into the spaces between the thread of the other screw member.

2. A ball screw system according to claim 1 in which each ball (1) is positioned between a concave ball track on opposed flanks of the thread (4,5) of each screw member (2,3), the point of contact of the ball with each ball track being equi-distant from the axis of the screw members.

3. A ball screw system according to any preceding claim in which each ball is positioned between a concave ball track on the thread root surface (6,7) of each screw member (2,3), with the point of contact of the ball with each ball track being equi-distant from the axis of the screw members.

4. A ball screw system according to any preceding claim in which the elasticity of the threads (4,5) is greater than that of the balls (1).

5. A ball screw system according to claim 4 in which the balls (1) are ceramic.

6. A worm gear system comprising a ball screw system according to any preceding claim, in which the outer screw member is a nut with a return passage (41, 42) extending between its two ends.

7. A worm gear system according to claim 6, in which the nut is a worm wheel (43) engaging a worm (46).
